# EUROPEAN PATENT APPLICATION

(11) **EP 4 273 455 A1**
(43) Date of publication of application: **08.11.2023**
(21) Application number: 22171472.8
(22) Date of filing: 03.05.2022
(51) Int. Cl.: F24C 15/34, F16L 59/065, F25D 23/00, F25D 23/12, F25D 23/06, B65D 81/38, E04B 1/80, B64D 11/04

(54) **AIRCRAFT GALLEY DEVICE**

(71) Applicant: B/E Aerospace, Inc., Winston-Salem, NC 27105 (US)
(72) Inventor: HUIJSING, Hans, IJsselstein (NL); VERMEULEN, Timothy, Amersfoort (NL)
(74) Representative: Dehns

(57) **Abstract**

An aircraft galley device (2) for heating or cooling an item is disclosed. The device (2) comprises a cavity (4) for receiving the item and arranged to be heated or cooled, a thermal insulation arrangement (6) comprising a chamber (12) that extends at least partially around said cavity (4), and a pump (22) arranged to evacuate air from the chamber (12).

## Description

### Technical Field

The present disclosure relates to aircraft galley devices for heating or cooling items such as food or drinks.

### Background

Commercial passenger aircraft often feature galley areas where provisions such as food and drinks are stored and prepared for in-flight consumption. The storage and preparation of food and drink along with other items frequently involves heating or cooling. For instance, drinks may be cooled in a refrigerator, and meals may be heated in an oven.

Typically, items are heated or cooled by placing them into a cavity which is heated or cooled to the required temperature. It is important to insulate thermally these cavities from the rest of the aircraft cabin, both to reduce the amount of energy required to attain and maintain the desired temperature, but also to avoid the surrounding area of the cabin becoming too warm or too cold. For instance, aircraft manufacturers and/or operators may set maximum allowable temperatures that structures or areas located near to ovens can be exposed to.

However, space in aircraft cabins for galley devices is limited. It may be desirable to reduce space taken up by the thermal insulation of such devices and/or to improve the level of thermal insulation provided.

### Summary

According to a first aspect of the present disclosure there is provided an aircraft galley device for heating or cooling an item, said device comprising:
a cavity for receiving the item and arranged to be heated or cooled;
a thermal insulation arrangement comprising a chamber that extends at least partially around said cavity; and
a pump arranged to evacuate air from the chamber.

According to a second aspect of the present disclosure there is provided a method of heating or cooling an item on an aircraft, said method comprising:
placing the item to be heated or cooled in a cavity of an aircraft galley device;
heating or cooling the cavity; and
using a pump to evacuate air from a chamber of a thermal insulation arrangement of the aircraft galley device, said chamber extending at least partially around said cavity.

Thus, it will be recognised by those skilled in the art that the use of a pump to evacuate air from the chamber may improve the thermal insulation of the cavity provided by the thermal insulation arrangement, compared to existing materials and arrangements for insulating aircraft galley devices. Evacuating air reduces the air pressure in the chamber, reducing heat transfer through the chamber by convection and conduction. For instance, the pump may be used to reduce the air pressure in the chamber to near-vacuum. Using a chamber from which air is evacuated allows the insulation arrangement to provide good thermal insulation in a limited space. The heat energy of air particles in the chamber is also extracted when air is evacuated from the chamber, helping to further reduce heat transfer to or from the cavity through the thermal insulation arrangement.

Using a chamber from which air is evacuated to provide thermal insulation may be particularly suited for aircraft galley devices because aircraft typically operate with a cabin pressure that is lower than the air pressure at sea level. It may therefore be easier to reduce the air pressure in the chamber to a level that provides good thermal insulation of the cavity.

The use of a pump may be advantageous compared to permanently sealing the chamber at a low air pressure (e.g. near-vacuum), because it may be impractical to obtain a seal sufficient to maintain the lowered air pressure over the whole expected lifetime of the aircraft galley device (e.g. 20 years). Using a pump to actively evacuate air means that the device can tolerate an imperfect seal of the chamber in the thermal insulation arrangement, because small leaks can be compensated for by the active pumping of the pump. The thermal insulation arrangement may thus be relatively lightweight and low cost, and may feature limited quantities of sealing materials such as adhesives or sealants which can be are undesirable or even prohibited in aerospace applications. The thermal insulation arrangement may also be easy to maintain because every leak does not have to be immediately remedied.

Using a pump to evacuate air means that the level of thermal insulation provided by the thermal insulation arrangement can be controlled by controlling the amount of air evacuated by the pump. The level of thermal insulation can thus be optimised for various different situations, for instance different levels of heating/cooling in the cavity and/or different desired temperatures for the surrounding space. For instance, it may be desirable to keep the surroundings of the aircraft galley device below a maximum temperature as explained above but also above a minimum temperature (e.g. to deter vermin). When the aircraft galley device is a heating device such as an oven, the pump may be controlled to attain a level of thermal insulation that allows sufficient heat to escape the oven to heat the surroundings above the minimum temperature, but that is sufficiently insulating to keep the surroundings below the maximum temperature.

In some examples, the aircraft galley device comprises a sensing arrangement configured to sense at least one property of the aircraft galley device. The sensing arrangement may be configured to measure a value of the at least one property (e.g. an air pressure in Pascals or a temperature in degrees Celsius). Additionally or alternatively, the sensing arrangement may be configured to detect if the at least one property is above or below a certain threshold and/or within a certain range. The sensing arrangement may be configured to sense a change in the at least one property over time (e.g. to measure a change and/or to detect if the change is above or below a certain threshold and/or within a certain range).

The sensing arrangement may comprise one or more pressure sensors, e.g. configured to sense an air pressure in the chamber and/or an ambient air pressure surrounding the aircraft galley device and/or a differential between an air pressure in the chamber and an ambient air pressure surrounding the aircraft galley device. The sensing arrangement may comprise one or more temperature sensors, e.g. configured to sense an ambient temperature surrounding the aircraft galley device and/or a temperature in the cavity and/or a temperature difference between an ambient temperature and a temperature in the cavity. The sensing arrangement may comprise an electrical sensor, e.g. configured to sense power and/or current consumed by the pump. The sensing arrangement may comprise one or more deflection sensors arranged to sense a physical deflection of one or more walls of the chamber (i.e. as an indirect measure of pressure in the chamber).

The sensing arrangement may facilitate monitoring of the aircraft galley device. In some examples, the aircraft galley device is arranged to determine one or more indicators of aircraft galley device performance using the sensing arrangement. For instance, the aircraft galley device may be configured to determine a level of insulation provided by the thermal insulation arrangement based on a sensed air pressure or temperature. The sensing arrangement may be used to detect a condition of the aircraft galley device. This may improve fault detection and diagnosis and/or allow faults to be avoided through preventative maintenance (e.g. if information from the sensing arrangement suggests that a fault is imminent). For instance, the aircraft galley device may be configured to determine the presence and/or magnitude of leaks in the chamber using the sensing arrangement (e.g. by observing a sudden increase in air pressure in the chamber). The aircraft galley device may be configured to determine a level of pump wear using the sensing arrangement (e.g. by monitoring a change in the air pressure the pump can maintain over time).

In a set of examples, the aircraft galley device comprises a controller arranged to control the evacuation of air from the chamber. The controller may control operation of the pump to control the evacuation of air from the chamber (e.g. switching the pump on or off and/or selecting a pump power level). The controller may, additionally or alternatively, control the evacuation of air in other ways (e.g. by controlling the degree to which an air outlet valve connected to the pump is open or closed).

In some sets of examples, the controller is configured to effect open-loop control over the evacuation of air from the chamber. In other words, the controller may control the evacuation of air from the chamber based on one or more inputs unrelated to process variables of the aircraft galley device (e.g. temperatures, pressures, power use). For example, the controller may control the evacuation of air from the chamber (e.g. by controlling the pump) based on manual user input, or according to a predetermined operation schedule (e.g. a predetermined duty cycle). The controller may control the evacuation of air from the chamber based on an predetermined estimate of a necessary level of insulation. The controller may control the evacuation of air from the chamber based on one or more predetermined constraints. For instance, the controller may be configured to only operate the pump at certain power levels and/or at certain times (e.g. to limit power use and/or noise production and/or pump wear).

In some sets of examples, the controller is configured to effect closed-loop control over the evacuation of air from the chamber. For instance, the controller may be arranged to control evacuation of air from the chamber (e.g. by controlling the pump) based on an output from a sensing arrangement configured to detect at least one property of the aircraft galley device. The controller may form a control feedback loop that controls evacuation of air from the chamber so as to achieve a desired level for one or more properties of the aircraft galley device. Using closed loop control over evacuation of air from the chamber may improve the performance of the aircraft galley device and/or prolong the lifetime of one or more components of the aircraft galley device (because they are not operated for longer and/or at power levels higher than needed to maintain a desired performance level). For instance, pump wear may be reduced by the pump being controlled to operate only when necessary.

The controller may combine open-loop and closed-loop controls. For instance, the controller may control evacuation of air from the chamber so as to achieve a desired level for one or more properties of the aircraft galley device based on an output from a sensing arrangement, but with one or more predetermined operation constraints (e.g. on pump operating times).

In a set of examples, the sensing arrangement comprises a pressure sensor configured to sense an air pressure (e.g. in the chamber) and the controller is arranged to control evacuation of air from the chamber (e.g. by controlling the pump) based on said sensed air pressure. The controller may be configured to control evacuation of air from the chamber to obtain a desired air pressure in the chamber (e.g. to keep the air pressure above or below a threshold, or within a range).

Controlling the evacuation of air from the chamber based on sensing directly the air pressure in the chamber may enable accurate and reliable control over the insulation provided by the thermal insulation arrangement (because the air pressure in the chamber is directly linked to its thermal conductivity). However, in some situations sensing the air pressure in the chamber directly may be inconvenient, and may also not be best for achieving optimal control over output conditions such as the ambient temperature surrounding the aircraft galley device. For instance, a level of insulation assumed to be necessary by the controller for keeping the ambient temperature within a set range may actually be inaccurate, e.g. if ambient conditions are different to those that were expected.

Accordingly, in a set of examples, additionally or alternatively, the sensing arrangement comprises a temperature sensor configured to detect an ambient temperature surrounding the aircraft galley device and the controller is configured to control evacuation of air from the chamber (e.g. by controlling the pump) based on said detected ambient temperature, for instance to obtain a desired ambient temperature (e.g. to keep the ambient temperature above or below a threshold, or within a range). Sensing the ambient temperature may be relatively simple, and it means that the controller provided with direct feedback on an output condition a user may be seeking to manage.

In some examples, additionally or alternatively, the sensing arrangement comprises an electrical sensor configured to detect power and/or current consumed by the pump, and the controller is arranged to control the evacuation of air from the chamber (e.g. by controlling the pump) based on said detected power and/or current. The power and/or current consumed by the pump may be relatively simple to sense and may represent a useful indication of the air pressure in the chamber because the relative air pressure between the chamber and the surroundings affects the load on the pump (and thus its power and/or current consumption).

The aircraft galley device may have several operating modes, e.g. for heating or cooling different item to different temperatures. In a set of examples, the aircraft galley device is arranged to operate in a first mode in which the cavity is heated or cooled to a first temperature, and a second mode in which the cavity is heated or cooled to a second temperature. In some such examples the pump is arranged to operate differently in the first and second modes. The controller may control evacuation of air from the chamber differently in the first and second modes. For instance, the first mode may comprise heating the cavity to a lower temperature than in the second mode, and the controller may control the pump to evacuate less air from the cavity in the first mode than in the second mode, as less insulation may be required when the cavity temperature is lower.

The thermal insulation arrangement may consists of a single chamber extending at least partially around the cavity. However, in a set of examples the thermal insulation comprises a plurality of chambers, each of the plurality of chambers extending at least partially around the cavity. The plurality of chambers may be in communication (e.g. separated by one or more valves), or they may be entirely separate. The pump may be arranged to evacuate air form each of the plurality of chambers. Additionally or alternatively, the aircraft galley device may comprise a plurality of pumps, wherein each pump is arranged to evacuate air from one or more chambers.

The chamber of the thermal insulation arrangement may be substantially empty, i.e. with no filling materials or structural supports. However, in a set of examples the chamber comprise one or more structures arranged to reinforce the chamber. This may help to ensure that the chamber keeps its shape and size when the internal air pressure is reduced. The chamber may comprise one or more separating structures that extend between walls of the chamber. The chamber may be partially or entirely filled with a porous separating material (i.e. that still allows for the evacuation of air from the chamber). Care may be taken to ensure that such separating structures or filling materials do not create a thermal bridge through the chamber.

The aircraft galley device may comprise a housing defining the cavity. The housing may also contain at least part of the thermal insulation arrangement. Additionally or alternatively, at least part of the thermal insulation arrangement may be provided separately (e.g. secured to or around the housing). In a set of examples, the thermal insulation arrangement is provided in one or more walls of the housing and may comprise one or more walls of the housing. In a set of examples, the thermal insulation arrangement at least partially defines the cavity. For instance, the thermal insulation arrangement may comprise one or more walls that at least partially defines the chamber and at least partially defines the cavity. The thermal insulation arrangement may comprise a wall separating the cavity from the chamber (i.e. the cavity and the chamber may be separated by a single wall of the thermal insulation arrangement).

In a set of examples, the chamber or chambers of the thermal insulation arrangement extend around a significant portion of the cavity, to provide good insulation to the cavity. For instance the chamber or chambers may cover over at least 30%, at least 40%, at least 50%, at least 60%, at least 70%, at least 80% or at least 90% or more of an outer surface area of the cavity.

The thermal insulation arrangement may comprise an air outlet valve that connects the chamber to the pump. The air outlet valve may be arranged to seal the chamber when the pump is not operating, to mitigate air flowing back into the chamber through the pump. In examples comprising a plurality of chambers and/or a plurality of pumps, an air outlet valve may be provided for each chamber and/or each pump.

The cavity may have one or more openings for introducing the item to the cavity and retrieving the item from the cavity. The cavity may comprise one or more permanent openings (e.g. an open side). However, it may be beneficial to be able to more completely enclose the cavity when an item is being heated or cooled. In a set of examples, the aircraft galley device comprises a door arranged to close the cavity. A user may open the door to introduce the item to the cavity and then close the door to enclose the item in the cavity.

In some such examples, the door comprises at least one door chamber forming part of the thermal insulation arrangement. The pump may be arranged to evacuate air from the door chamber. The door chamber may be provided in addition to one or more other chambers of the thermal insulation arrangement. The door chamber may be arranged to be in communication with one or more other chambers of the thermal insulation arrangement when the door is closed. The thermal insulation arrangement may comprise a duct arranged to couple the door chamber to one or more other chambers of the thermal insulation arrangement when the door is closed (i.e. to put the door chamber in fluid communication with one or more other chambers when the door is closed). In some examples, the thermal insulation arrangement comprises a plurality of ducts in different locations (at the top, bottom and/or sides of the door) arranged to couple the door chamber to one or more other chambers of the thermal insulation arrangement when the door is closed. Providing a plurality of ducts may allow for increased air flow to/from the door chamber. The thermal insulation arrangement may comprise one or more valves arranged to seal the door chamber when the door is open (e.g. to stop air ingress to the door chamber when the door is open).

The aircraft galley device may comprise any device suitable for use in an aircraft galley for heating or cooling items. The aircraft galley device may comprise an oven such as a convection oven, a steam oven or a pressurised steam oven. The aircraft galley device may comprise a refrigeration device such as a fridge, a freezer or a chiller.

In some examples, the aircraft galley device comprises one or more heating or cooling components. For instance, the aircraft galley device may comprise a heating element configured to heat the cavity (e.g. a resistive heating element), a cooling element configured to cool the cavity (e.g. a heat pump), and/or a fan for circulating heated or cooled air in the cavity.

In some examples, the aircraft galley device comprises a motor configured to drive one or more heating or cooling components. For instance, the aircraft galley device may comprise an motor configured to drive a fan in a convection oven or a compressor in a heat pump. In some such examples the motor is also configured to drive the pump arranged to evacuate air from the chamber. Re-purposing an existing motor to drive the pump may reduce the cost and/or size of the aircraft galley device and may facilitate retrofitting. Alternatively, the aircraft galley device may comprise a dedicated drive motor for the pump.

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a front view of part of an aircraft galley which includes an aircraft galley oven; and
Figure 2 is a side view cross-section of the aircraft galley oven according to an example of the present disclosure.

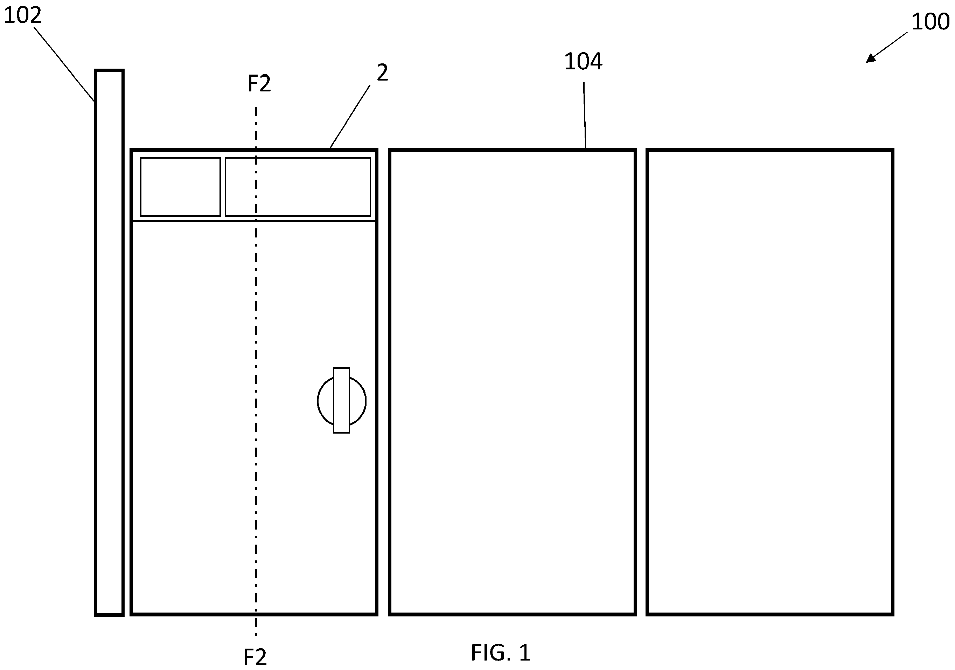

Figure 1 shows part of an aircraft galley 100. The galley 100 features a number of aircraft galley devices including an aircraft galley oven 2. The oven 2 is immediately adjacent a bulkhead 102 on one side and another aircraft galley device 104 (e.g. a fridge) on the other side. It is important to maximise the use of space in the aircraft galley 100, so there is only a small gap between the sides of the oven and the bulkhead 102 and the other aircraft galley device 104.

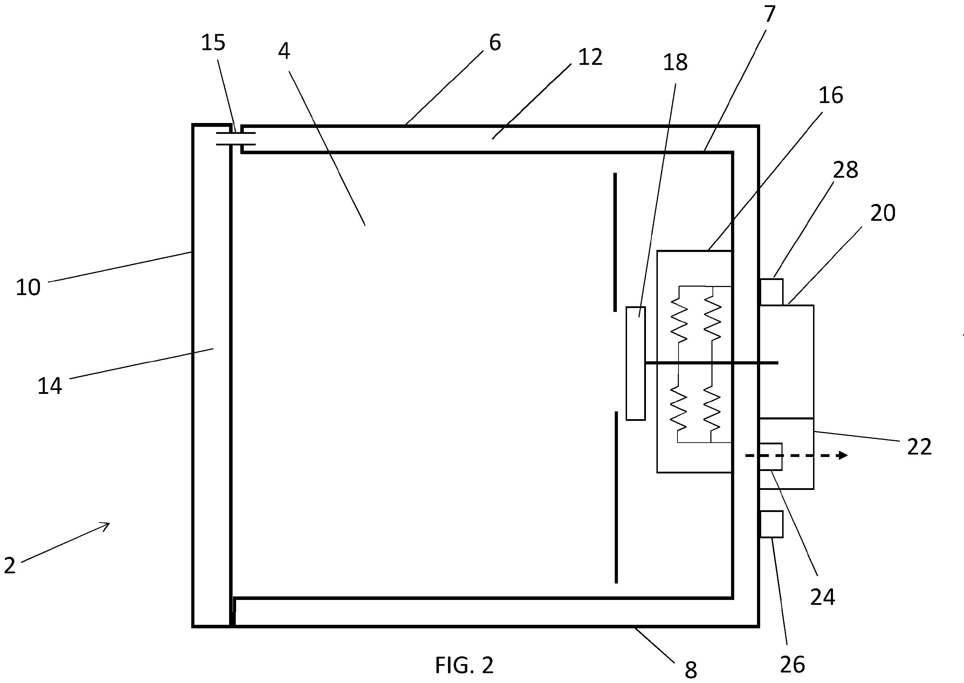

Figure 2 shows a cross section of the oven 2 along a plane extending into the page along the dashed line marked F2 in Figure 1. The oven 2 comprises a cavity 4 in which an item is placed to be heated. The cavity 4 is enclosed by a thermal insulation arrangement 6. The thermal insulation arrangement 6 forms the walls of the cavity 4. The thermal insulation arrangement 6 comprises a main portion 8 that forms the top, bottom, back and sides of the cavity 4, and a door 10 that closes the front of the cavity 4.

The main portion 8 of the thermal insulation arrangement 6 comprises a main chamber 12 that extends throughout the main portion 8 and around the cavity 4. The thermal insulation arrangement 6 comprises a wall 7 that separates the cavity 4 from the main chamber 12. The door 10 comprises a door chamber 14 that extends over the front of the cavity 4, and a duct 15 extending from the door chamber 14. When the door 10 is closed (as shown in Figure 1), the duct 15 connects the main chamber 12 to the door chamber 14.

The oven 2 also comprises a heating element 16 and a fan 18 located within the cavity 4. The fan 18 is powered by a fan motor 20 located outside of the cavity 4. Finally, the oven 2 comprises an air pump 22 located outside of the cavity 4. In this example, the air pump 22 is powered by the fan motor 20. The oven 2 comprises a pressure sensor 24 that measures the air pressure in the main chamber 12. The oven 2 also comprises a temperature sensor 26 that measures the ambient temperature surrounding the oven 2, and a current sensor 28 that measures current used by the motor 20.

The oven 2 is used to heat at item (not shown) during a flight. An item to be heated is placed in the cavity 4 with the door 10 closed. The heating element 16 heats air within the cavity 4 and the fan 14 distributes the heated air around the cavity 4 to heat the item. In use, the temperature inside the cavity 4 may reach high cooking temperatures, whilst the bulkhead 102 may be designed to be exposed to much lower temperatures. Regulations may also stipulate a maximum allowable temperature for the front of the oven door 10 (which is handled by aircraft crew). The oven cavity 4 thus needs to be effectively thermally insulated in the limited space available.

Therefore, the air pump 22 is used to evacuate air from the main chamber 12 of the thermal insulation arrangement 6. When the door 10 is closed, the duct 15 connects the main chamber 12 to the door chamber 14, and so the pump also evacuates air from the door chamber 14. Although not shown, the door 10 may comprise a plurality of ducts for connecting the main chamber 12 to the door chamber 14 at different locations (e.g., at the top, bottom and/or sides of the door 10), to minimise air flow resistance. The pressure sensor 24 detects the air pressure in the chamber 12 and the air pump 22 is controlled to achieve a desired low pressure (e.g. near-vacuum pressure) in the chamber 12. Because the air pump 22 actively evacuates air from the chamber 12, the target air pressure can be achieved even if there are small leaks in the chambers 12, 14.

The air pump 22 operates intermittently whilst the oven 2 is used. Based on the air pressure detected by the pressure sensor 24, the air pump 22 is switched on and off as necessary to maintain the target pressure. Alternatively, a power of the air pump 22 may be regulated according to the detected air pressure (e.g. the air pump 22 may be operated at high power when the air pressure is far from the target pressure, and at a lower power when the air pressure is close to the target pressure). In other examples, the pump 22 may be controlled based on outputs from the other sensors 26, 28.

Reducing the air pressure in the chamber 12 by evacuating the air reduces heat transferring from the oven to the surroundings through the chamber by convection or conduction. By lowering the pressure to near-vacuum, the thermal insulation arrangement 6 can provide excellent thermal insulation in the limited space available, ensuring that the oven's surroundings do not exceed their maximum allowed temperatures.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. An aircraft galley device for heating or cooling an item, said device comprising:
a cavity for receiving the item and arranged to be heated or cooled;
a thermal insulation arrangement comprising a chamber that extends at least partially around said cavity; and
a pump arranged to evacuate air from the chamber.

2. The aircraft galley device of claim 1, comprising a sensing arrangement configured to sense at least one property of the aircraft galley device,

3. The aircraft galley device of claim 2, comprising a controller arranged to control evacuation of air from the chamber based on an output from said sensing arrangement.

4. The aircraft galley device of claim 3, wherein the controller is arranged to control the pump based on an output from the sensing arrangement.

5. The aircraft galley device of claim 2, 3 or 4, wherein the sensing arrangement comprises a pressure sensor configured to sense an air pressure in the chamber and/or a differential between an air pressure in the chamber and an ambient air pressure surrounding the aircraft galley device.

6. The aircraft galley device of any of claims 2-5, wherein the sensing arrangement comprises one or more temperature sensors configured to sense an ambient temperature surrounding the aircraft galley device and/or a temperature in the cavity.

7. The aircraft galley device of any of claims 2-6, wherein the sensing arrangement comprises a electrical sensor configured to sense power and/or current consumed by the pump.

8. The aircraft galley device of any preceding claim, comprising a door arranged to close the cavity, wherein the door comprises at least one door chamber forming part of the thermal insulation arrangement and wherein the pump is arranged to evacuate air from the door chamber.

9. The aircraft galley device of claim 8, wherein the door comprises a duct arranged to couple the chamber to the door chamber when the door is closed.

10. The aircraft galley device of any preceding claim, arranged to operate in a first mode in which the cavity is heated or cooled to a first temperature, and a second mode in which the cavity is heated or cooled to a second temperature, wherein the pump is arranged to operate differently in the first and second modes.

11. The aircraft galley device of any preceding claim, comprising a heating or cooling component used when heating or cooling the cavity and a motor configured to drive said heating or cooling component, wherein the motor is also configured to drive the pump.

12. The aircraft galley device of any preceding claim, wherein the thermal insulation arrangement comprises a wall separating the cavity from the chamber.

13. The aircraft galley device of any preceding claim, wherein the aircraft galley device is an oven such as a convection oven, a steam oven or a pressurised steam oven.

14. A method of heating or cooling an item on an aircraft, said method comprising:
placing the item to be heated or cooled in a cavity of an aircraft galley device;
heating or cooling the cavity; and
using a pump to evacuate air from a chamber of a thermal insulation arrangement of the aircraft galley device, said chamber extending at least partially around said cavity.

15. The method of claim 14, comprising sensing at least one property of the aircraft galley device and controlling evacuation of air from the chamber based on said sensing.
